# EUROPÄISCHE PATENTSCHRIFT

(11) **EP 3 148 798 B1**
(45) Veröffentlichungstag und Bekanntmachung des Hinweises auf die Patenterteilung: **27.03.2019**
(21) Anmeldenummer: 15723505.2
(22) Anmeldetag: 19.05.2015
(51) Int. Cl.: B32B 21/08, B32B 27/08, B32B 27/10, B32B 27/18, B32B 27/30

(54) **DREI-SCHICHT-UV-SCHUTZFOLIE FÜR DEKORATIVE SCHICHTPRESSSTOFFPLATTEN (HPL)**
THREE-LAYER UV PROTECTIVE FILM FOR DECORATIVE LAMINATED SHEETS (HPL)
FILM DE PROTECTION ANTI-UV À TROIS COUCHES POUR PANNEAUX DÉCORATIFS STRATIFIÉS (HPL)

(30) Priorität: 26.05.2014 DE 102014210007
(43) Veröffentlichungstag der Anmeldung: 05.04.2017
(73) Patentinhaber: Evonik Röhm GmbH, 64293 Darmstadt (DE)
(72) Erfinder: PARUSEL, Markus, 64409 Messel (DE); ENDERS, Michael, 64807 Dieburg (DE); GUENANTEN, Claude, 64291 Darmstadt (DE); GOLDER, Michael, F-90000 Belfort (FR)
(74) Vertreter: Evonik Patent Association
(86) Internationale Anmeldenummer: PCT/EP2015/060929
(87) Internationale Veröffentlichungsnummer: WO 2015/180995

(56) Entgegenhaltungen:
- WO-A1-2013/160121
- US-A1- 2008 311 406

## Beschreibung

### Gebiet der Erfindung

Die vorliegende Erfindung betrifft Folien zur Applikation auf Werkstoffen als Schutzfolie vor Witterungseinflüssen. Insbesondere betrifft die vorliegende Erfindung einen mindestens dreischichtigen Folienverbund, der sich durch eine besonders gute Haftung auf dem Substrat und besonders guten optischen Eigenschaften auszeichnet. Dabei handelt es sich bei der äußersten Schicht um eine Schicht, enthaltend ein Fluorpolymer, bei der mittlere Schicht um eine PMMA-Schicht, enthaltend mindestens einen UV-Absorber und/oder UV-Stabilisator und bei der innersten Schicht um eine PMMA-Schicht, enthaltend mindestens einen Haftvermittler, der die Haftung auf dem Substrat verbessert.

Die vorliegende Erfindung betrifft dabei insbesondere UV-Schutzfolien für so genannte High-Pressure-Laminates (HPL). Zur Herstellung dieser HPL lassen sich Melamin- und Phenol-Harz getränkte Papiere unter hohem Druck von mindestens 5 MPa (spez.), Temperaturen von über 120°C und einer Zykluszeit, die in der Regel bei 30 bis 100 min liegt, miteinander verpressen. Der so produzierte Verbundwerkstoff wird hierbei mit einer dekorativen Deckschicht ausgestattet. So lassen sich besondere Erscheinungsbilder, wie z.B. Holzimitate oder Unidekore, realisieren.

Diese dekorativen Schichtpressstoffplatten werden in vielen Anwendungsbereichen eingesetzt. Hierzu zählen z.B. Tischplatten, Türblätter, Möbel, Küchenarbeitsplatten sowie Platten zur Wand-, Balkon- oder Fassadenverkleidung. Während in der Innenanwendungen kein besonderer UV-Schutz benötigt wird, muss die Melaminharzoberfläche im Außeneinsatz zusätzlich mit einer schützenden Schicht ausgestattet werden, da reine Melaminharzoberflächen schon nach relativ kurzer Zeit eine eindeutige Degradation aufweisen. Insbesondere eine Verbesserung der Witterungs- und UV-Beständigkeit von HPL für den Außeneinsatz ist das Gebiet der vorliegenden Erfindung.

### Stand der Technik

Ein geeigneter, d.h. vor allem langlebiger, Schutz der HPL kann beispielsweise durch die gleichzeitige Verpressung einer UV-Schutzfolie auf Basis von Poly(methyl)methacrylat erreicht werden. In einer besonderen Ausführungsform ist die Außenseite der UV-Schutzfolie zusätzlich mit einer PVDF-Schicht ausgestattet, um das Verschmutzungsverhalten sowie die Chemikalienbeständigkeit des Gesamtverbunds zu verbessern.

Im Außeneinsatz musste man jedoch feststellen, dass die rein physikalische Haftung der UV-Schutzfolie mit dem Reaktionsharz beschichteten Papieren nicht ausreicht, um einen über Jahre beständigen Verbund zu gewährleisten. Durch Witterungseinflüsse konnte nach wenigen Jahren eine teilweise bis sogar vollständige Delamination der Folie von der HPL-Oberfläche beobachtet werden.

Damit bestand die Aufgabe einen UV-Schutz zu entwickeln, mit dem sich in Kombination mit den Reaktionsharz imprägnierten Papieren ein beständiger Verbund realisieren lässt, der über eine ausreichende UV-Beständigkeit verfügt.

Gelöst wurde diese technische Aufgabe beispielsweise in der EP 1 664 191 dadurch, dass man die Folienseite, die mit den Melaminharz imprägnierten Papieren verpresst wird, mit einem Haftvermittler z.B. auf Basis von Säureanhydriden ausstattet. Das Anhydrid liegt hierbei als funktionelle Gruppe an einem Polymethacrylat vor. Beim HPL-Pressvorgang reagiert das Anhydrid mit dem Melaminharz über eine nukleophile Addition. Durch die Kombination von physikalischer und chemischer Anbindung der Folie sowie dem Einsatz eines UV-Schutzpaketes, lassen sich so dekorative High-Pressure-Laminates herstellen, die im Außeneinsatz über Jahre beständig sind. Optional liegen diese Folien gemäß EP 1 664 191 als Coexfolien mit einer PVDF-Außenschicht vor.

Jedoch wurden zuletzt, insbesondere bei den Coexfolien verschiedene Nachteile offenbar. Diese treten insbesondere bei sehr langem Gebrauch oder bei einer zum Vergleich durchgeführten künstlichen Bewitterung der entsprechend ausgestatteten HPLs auf. Dabei wiesen diese Coexfolien direkt nach dem Verpressen einen so genannten Blauschimmer, d.h. eine ins Bläuliche tendierende Verfärbung auf. Um diesem Effekt entgegen zu treten, kann die Coexfolie auch mit nur sehr geringen Haftvermittlermengen ausgestattet werden. Bei solchen, keinen oder nur noch sehr geringen Blauschimmer aufweisenden Folien kommt es nach der Bewitterung jedoch zu einer Delamination entweder zwischen den Coexschichten oder zum eigentlichen HPL. Oft konnten auch beide Effekte - Delamination und Blauschimmer - beobachtet werden, wobei bei einem höheren Haftvermittleranteil eher eine Tendenz zum Blauschimmer und zu Delamination der CoexSchichten, und bei geringen Anteilen eine Tendenz zur Delamination gegenüber dem HPL zu beobachten ist.

In US 2008/0311406 wird eine dreischichtige Folie beschrieben, die aufgebaut ist aus: A.) einer PVDF-Außenschicht, B.) einer Zwischenschicht, bestehend aus einem PVDF-PMMA-Blend, der UV-Absorber, wie z.B. Tinuvin 234, enthält, und C.) einer Haftvermittler-Schicht, die u.a. ein Anhydrid der Methacrylsäure enthält. Die Folie zeichnet sich insbesondere dadurch aus, dass diese im Wasserlagerungstest für 2h bei 100°C keine Weißverfärbung und darüber hinaus in Verbindung mit Melaminharz getränkten Papieren eine gute Haftung aufweist. Der hohe Anteil an PVDF in der Zwischenschicht B stellt dabei jedoch einen wirtschaftlichen Nachteil dar.

WO 2013/160121 A1 beschreibt eine PMMA-Folie, aufweisend mindestens zwei Schichten, die jeweils ein PMMA-Matrixmaterial aufweisen, dadurch gekennzeichnet, dass mindestens eine der beiden Schichten Schlagzähmodifizierungsmittel enthält, und dass die innere Schicht zusätzlich zu dem PMMA-Matrixmaterial zwischen 2,0 und 20 Gew% eines oligomeren PMMA, mit einem mittels SEC gegen einen PMMA-Standard gemessenen gewichtsmittleren Molekulargewicht zwischen 300 und 1500 g/mol enthält.

### Aufgabe

Aufgabe der vorliegenden Erfindung war es somit in Hinblick auf den Stand der Technik, eine neuartige Folie zur Vergütung von HPLs zur Verfügung zu stellen, die auch in der langzeitigen Außenanwendung unter Witterungseinfluss keine Delaminationen, keinen Blauschimmer und hervorragende Optik, z.B. mit einem geringer Haze, aufweist.

Insbesondere war es Aufgabe der vorliegenden Erfindung, eine neuartige Folie für HPLs zur Verfügung zu stellen, die bei der Verpressung auf den HPL eine gute Anfangs- sowie Langzeithaftung aufweist.

Darüber hinaus war die Bereitstellung einer Folie, die neben einer hohen eigenen Witterungsstabilität einen ausreichenden Schutz für witterungsempfindliche Gegenstände, wie HPLs, gegen Feuchtigkeit, Wind, Sonnenstrahlung und insbesondere UV-Strahlung gewährleistet, Aufgabe der vorliegenden Erfindung.

Weitere nicht explizit genannte Aufgaben ergeben sich aus der folgenden Beschreibung sowie den Beispielen und den Ansprüchen der vorliegenden Schrift.

### Lösung

Gelöst werden die Aufgaben durch die Zurverfügungstellung einer neuartigen UV-Schutzfolie, die zum Verpressen auf Schichtpressstoffplatten (HPLs) geeignet ist. Diese Schutzfolie weist von außen nach innen folgende miteinander verbundene Schichten auf: eine Schicht A, enthaltend ein Fluorpolymer, eine PMMA-Schicht B, enthaltend mindestens einen UV-Stabilisator und/oder-Absorber und eine Schicht C, enthaltend mindestens einen Haftvermittler und mindestens ein Poly(meth)acrylat Bevorzugt weisen die Schichten B und C beide jeweils mindestens einen UV-Stabilisator und/oder -Absorber auf.

Dabei kann die Schicht C mit einem Harz-getränkten Papier, bevorzugt mit einem Melaminharzgetränkten Papier zu einem HPL verpresst werden. Weiterhin ist die Schutzfolie dadurch charakterisiert, dass die Schichten B und die Schicht C mindestens ein Schlagzähmodifizierungsmittel aufweisen. Bevorzugt weist die Schicht A eine Dicke zwischen 1 und 25 µm, bevorzugt zwischen 5 und 20 µm, die Schicht B eine Dicke zwischen 15 und 125 µm, bevorzugt zwischen 10 und 100 µm, besonders bevorzugt zwischen 10 und 60 und Schicht C eine Dicke zwischen 1 und 25 µm, bevorzugt zwischen 5 und 20 µm, auf.

Überraschend wurde an dem erfindungsgemäßen Aufbau der Schutzfolien gefunden, dass durch die Entkopplung der Haftvermittlerschicht C von der Fluorpolymerschicht A alle zur Herstellung von HPL benötigten technischen Merkmale, wie eine hohe Chemikalienbeständigkeit, einen hohen UV-Schutz, eine gute chemische Anbindung oder ein sehr gutes optisches Erscheinungsbild, erfüllt werden, und dass der mit der Schutzfolie ausgestatte HPL zusätzlich weder direkt nach dem Verpressen, noch nach Bewitterung einen Blauschimmer aufweist. Auch eine Delamination nach Bewitterung ist nur sehr selten und im Vergleich zum Stand der Technik im deutlich reduzierten Maße zu beobachten.

Erfindungsgemäß sind die erfindungsgemäßen Schutzfolien zur Herstellung von HPL's auch für die Herstellung so genannter MPL (Medium Pressure Laminates) oder so genannter CPL (Continuous Pressure Laminates) geeignet. MPL werden im Vergleich zu HPL bei geringeren Drücken und/oder Temperaturen hergestellt. CPL werden unter den gleichen Bedingungen wie HPL, nur mit verkürzten Zykluszeiten zwischen 2 und 30 min hergestellt.

Bei den in den Schichten B und/oder C, bevorzugt in Schicht B oder in den Schichten B und C zur UV-Stabilisierung enthaltenen UV-Stabilisatoren handelt es sich in der Regel um sterisch gehinderten Amine (Hindered Amine Light Stabilizer; HALS-Verbindungen). Bei den alternativ oder zusätzlich enthaltenen UV-Absorbern kann es sich um Benzophenone, Salicylsäureester, Zimtsäureester, Oxalanilide, Benzoxazinone, Hydroxyphenylbenztriazole, Triazine, Benztriazole oder Benzyliden-Malonate handeln, bevorzugt um Triazine und/oder Benztriazole und besonders bevorzugt um eine Mischung aus Triazinen und Benztriazolen. Alternativ können UV-Absorber auch mittels einer polymerisationsaktiven Gruppe in das Matrixmaterial einpolymerisiert sein. Eine ausführliche Auflistung geeigneter Verbindungen und deren bevorzugter Konzentration in PMMA-Schichten, wie Schicht B, findet sich in EP 1 963 415.

Bei den Schlagzähmodifizierungsmitteln in den Schichten B und C handelt es sich bevorzugt um Kern-Schale oder um Kern-Schale-Schale-Partikel. Bevorzugt besteht mindestens eine Schale aus einem Poly(meth)acrylat. Insbesondere bevorzugt sind Partikel mit einem weichen Kern, d.h. einem Kern, der eine Glasübergangstemperatur unterhalb von 0 °C, bevorzugt unterhalb von - 10 °C und einer Schale mit einer Glasübergangstemperatur oberhalb von 20 °C, bevorzugt oberhalb von 70 °C. In der Regel besteht die Weichphase dabei überwiegend aus Acrylatwiederholungseinheiten mit 1 bis 6 Kohlenstoffatomen im Alkylrest und die Hartphase überwiegend aus MMA-Wiederholungseinheiten. Die Schlagzähmodifizierungsmittel haben bevorzugt einen mittleren Teilchendurchmesser von 10 bis 150 nm. Die Bestimmung des Teilchendurchmessers erfolgt im Falle der Schlagzähmodifizierungsmittel mittels Messungen nach der Ultrazentrifugenmethode. Eine genauere Beschreibung geeigneter Schlagzähmodifizierungsmittel für ein PMMA-Matrixmaterial findet sich in WO 2007/073952. Als besonders günstig haben sich dabei Schlagzähmodifizierungsmittel erwiesen, die nach einem in der Europäischen Patentanmeldung mit dem Aktenzeichen 13193654.4 beschriebenen Verfahren aufgearbeitet wurden.

Der schlagzähmodifizierte Poly(meth)acrylat-Kunststoff der PMMA-Schicht B besteht in der Regel aus 20 bis 80 Gew%, bevorzugt aus 30 bis 75 Gew% des PMMA-Matrixmaterials und aus 20 bis 80 Gew%, bevorzugt aus 25 bis 70 Gew% Schlagzähmodifizierungsmittel. Bei diesen Angaben sind Zuschlagsstoffe, wie zum Beispiel Streumittel, Mattierungsmittel und eventuelle weitere Additive oder Farbstoffe nicht berücksichtigt.

Bei dem PMMA-Matrixmaterial in Schicht B und bei dem Poly(meth)acrylat in Schicht C handelt es sich bevorzugt jeweils um ein Polymer, welches erhalten wird durch eine Polymerisation einer Zusammensetzung bestehend aus 80 bis 100 Gew% Methylmethacrylat und 0 bis 20 Gew.-% eines oder mehrerer weiterer ethylenisch ungesättigter, radikalisch polymerisierbarer Monomerer, bevorzugt Alkylacrylate. Dabei können das PMMA in Schicht B und das Poly(meth)acrylat in Schicht C identisch oder verschieden bezüglich Zusammensetzung und/oder Molekulargewicht sein. Diese Polymere werden ohne Berücksichtigung der Schlagzähmodifizierungsmittel im Weiteren als Matrixmaterialien bezeichnet. Eine Vorschrift zur Herstellung geeigneter Matrixmaterialien und eine Auflistung der verwendbaren Comonomere finden sich in EP 1 963 415.

In einer besonderen Ausführungsform handelt es sich bei der Schicht B um eine mechanisch belastbare PMMA-Schicht. Dies bedeutet, dass das dort verwendete PMMA-Matrixmaterial ein besonders hohes Molekulargewicht aufweist. Dieses besonders hohe Molekulargewicht liegt zwischen 100 000 und 200 000 g/mol, bevorzugt zwischen 120 000 und 170 000 g/mol.

Die Schichten A, B und C der erfindungsgemäßen Schutzfolie können über die beschriebenen Komponenten hinaus weitere Zuschlagsstoffe, wie z.B. Farbstoffe, Verarbeitungshilfen oder weitere Stabilisatoren enthalten.

Bei dem Fluorpolymer in Schicht A handelt es sich bevorzugt um PVDF, PVF, PETFE (Polyethylen-tetrafluorethylen) oder um PFEVE (Polyfluorethylenvinylether). Insbesondere bevorzugt ist dieses Fluorpolymer ein überwiegend amorphes oder ein mikrokristallines PVDF mit einem Haze kleiner 5. Besonders vorteilhaft ist es, wenn die Schicht A ausschließlich aus PVDF und optionalen Additiven besteht. Bei diesen Additiven kann es sich beispielsweise um weitere UV-Schutzmittel, Pigmente, Mattierungsmittel, Stabilisatoren oder Kratzschutzadditive handeln. Beispiele für besonders gut geeignete PVDF-Typen mit entsprechend geringem Haze sind Solef® 9009 der Firma Solvay und Kynar® 9000HD der Firma Arkema. Der Haze wird dazu an einer 30 µm dicken reinen Fluorpolymer- (PVDF-)Folie bei 23°C nach ASTM D1003 gemessen.

Schicht C enthält bevorzugt zwischen 5 und 99 Gew%, besonders bevorzugt zwischen 10 und 60 Gew% und insbesondere bevorzugt zwischen 15 und 40 Gew% Haftvermittler. Erfindungsgemäß liegt der Haftvermittler in Schicht C als ein Copolymer, aufweisend mindestens ein (Meth)acrylat und ein copolymerisierbares Anhydrid und/oder eine copolymerisierbare Disäure, vor. Besonders bevorzugt handelt es sich bei dem Haftvermittler um ein Copolymer aus MMA, Styrol und Maleinsäureanhydrid. Als sehr vorteilhaft hat sich dabei eine Zusammensetzung erwiesen, die 5 bis 40 Gew%, bevorzugt 8 bis 20 Gew% Maleinsäureanhydrid als copolymerisierte Komponente enthält. Ein solcher Haftvermittler kann insbesondere mittels Substanz- oder Lösungspolymerisation hergestellt werden.

Überraschend wurde festgestellt, dass eine erfindungsgemäße Schutzfolie auch nach Langzeitbewitterung nicht zu einer Delamination neigt, während eine Folie, die nur aus den Schichten A und C besteht, zu einem deutlich hohen Anteil nach einer Langzeitbewitterung delaminiert. Dies ist unter anderem auf den Styrolanteil im verwendeten Haftvermittler zurückzuführen. Überraschend ist es somit insbesondere, dass der gleiche Haftvermittler in der erfindungsgemäßen Schutzfolie mit deutlich verringerter Tendenz zur Delamination verwendet werden kann.

Weiterhin kann beobachtet werden, dass Schichten A, die aus einem PVDF mit einem geringen (mikro)kristallinen Anteil und damit mit besonders geringem Haze bestehen, bei der direkten Coextrusion mit der beschriebenen Zusammensetzung der Schicht C zu Fließinhomogenitäten führen, die im Endprodukt als Streifen erkennbar sind. Überraschend wurde gefunden, dass eine entsprechende, erfindungsgemäße Schutzfolie mit der zusätzlichen Schicht B diese Streifen nicht aufweist.

Die erfindungsgemäße Schutzfolie kann mittels Lamination, mittels eines Gussverfahrens oder - bevorzugt - mittels Coextrusion hergestellt werden. Bevorzugtes Verfahren zur Herstellung der erfindungsgemäßen Schutzfolie ist eine Mehrschichtcoextrusion.

In einer besonderen Ausführungsform kann die Schicht A zusätzlich auf der Oberfläche strukturiert werden. Solche Strukturen können zum Beispiel größere Vertiefungen, Maserungen oder Mattierungen sein. Insbesondere können die Strukturierungen mittels entsprechend strukturierten Pressoberflächen, z.B. in Form von Metallplatten, bei dem Verpressen der erfindungsgemäßen Schutzfolie auf ein Harz-getränktes Papier realisiert werden. Damit ist gleichzeitig auch eine Schutzfolie, eine solche strukturierte Schicht A aufweisend, eine bevorzugte Ausführungsform der vorliegenden Erfindung.

Neben der erfindungsgemäßen Schutzfolie ist auch deren Verwendung in Form eines Verfahrens zur Herstellung von HPLs, MPLs oder CPLs Teil der vorliegenden Erfindung. Insbesondere ist die Verwendung der erfindungsgemäßen Schutzfolie zur Herstellung von HPLs Bestandteil der vorliegenden Erfindung. Insbesondere erfolgt diese Verwendung im Rahmen eines Verfahrens, bei dem die Schutzfolie auf mit Melamin- oder Phenolharz getränktem Papier, bevorzugt direkt auf ein Melamin-Harz getränktem Dekorpapier mit einem Druck ≥ 5 MPa bei einer Temperatur ≥ 120 °C mit einer Zykluszeit zwischen 30 und 100 min gepresst wird.

Die Harz-getränkten Papiere können dabei insbesondere mehrschichtig vorliegen. Besonders verbreitet sind Ausführungsformen, bei denen mehrere Schichten mit einem Phenolharz getränkt sind und zwischen diesen und der Schutzfolie mindestens eine Schicht, die mit einem Melanimharz getränkt ist liegt. Diese Schicht ist zusätzlich eingefärbt oder bedruckt und stellt damit eine Dekorschicht dar. Auch ist es möglich, dass als Dekorschicht eine dünne Schicht aus Melaminharz imprägniertem Echtholzfunier vorliegt, auf die die Schutzfolie dann gepresst wird.

Bei dem Verpressen der Schutzfolie auf die Harz-getränkten Papiere sind zwei Varianten möglich. Zum einen kann die Schutzfolie auf das bereits vorgefertigte, also gepresste HPL, MPL bzw. CPL gepresst werden. Bei dieser Variante kann das Verpressen innerhalb einer kürzeren Zeit erfolgen. Bevorzugt ist es jedoch, dass die Verpressung der einzelnen Papierschichten und die Verbindung mit der Schutzfolie im gleichen Verfahrensschritt erfolgen. Bei dieser Variante sind die oben angegeben Zykluszeiten vorteilhaft.

### Beispiele

Die Witterungstests wurden in Form eines Xenotests Beta LM der Firma Atlas gemäß DIN EN ISO 4892-2, Methode A, Zyklus 1 durchgeführt. Optische und mechanische Beurteilungen erfolgten nach 0 h, 1000 h, 2500 h, 3333 h, 10 000 h und 15 000 h.

Alternativ wurde ein beschleunigtes Verfahren in Anlehnung an die DIN EN ISO 4892-2, Methode A, Zyklus 1, jedoch mit einer Schwarzstandardtemperatur von 70 °C +/- 5 °C, einer Probenraumtemperatur von 40 °C +/- 5 °C sowie einer UV-Bestrahlungsleistung von 180 W/m² im Bereich der Wellenlänge von 300 bis 400 nm durchgeführt. Optische und mechanische Beurteilungen erfolgten nach 0 h, 333 h, 833 h, 1666 h, 2500 h, 3333 h und 5000 h.

Der Haze wurde gemäß ASTM D1003 bei 23 °C bestimmt. Die Messungen zur Bestimmung des Haze der Fluorpolymere erfolgten an einer entsprechenden 30 µm dicken Monofolie

Als UV-Stabilisatorpaket wurde eine Mischung aus 46,3 Gew% Tinuvin® 360, 18,7 Gew% Sabostab® 119FL und 35,0 Gew% Tinuvin® 1600 verwendet.

Die Herstellung der HPL erfolgte durch gleichzeitiges Verpressen der Harz-getränkten Papierschichten und der aufgelegten Schutzfolien. Die Kernlage bestand aus Phenolharz getränkten Papieren. Zwischen diesen und der Schutzfolie lag ein mit Melanimharz getränktes Dekorpapier. Bei den Ergebnissen gemäß Tabelle 1 wurde ein erstes HPL verwendet. Bei den Ergebnissen gemäß Tabelle 2 wurde ein analog aufgebautes, Anthrazit-gefärbtes HPL verwendet.

Die Herstellung der Schutzfolien erfolgte mittels Adaptercoextrusion über den Chill-Roll-Prozess Alternativ ist eine Herstellung über eine Mehrkanalcoextrusion oder der Kombination von Adapter und Mehrkanalcoextrusion denkbar.

Als Haftvermittler wurde ein Copolymer aus 75 Gew% MMA, 15 Gew% Styrol und 10 Gew% Maleinsäureanhydrid verwendet. Dieses Copolymer hatte eine gewichtsmittleres Molekulargewicht M_{w} von ca 100 000 g/mol (bestimmt mittels GPC gegen einen PMMA-Standard).

Allgemeine Angaben zu den PMMA in den Schichten B und C: Hier wurden Matrixmaterialien mit Schlagzähmodifier eingesetzt. Bei den Schlagzähmodifier handelt es sich um Kern-Schale oder um Kern-Schale-Schale-Partikel. Da sich die äußerste Schale dieser Partikel jeweils vollständig mit dem Matrixmaterial mischt, werden im Folgenden zu den Zusammensetzungen die jeweils äußeren Schalen dem Matrixmaterial zugerechnet und als Schlagzähmodifier nur der Kern eines Kern-Schale-Partikels bzw. der Kern und die innere Schale eines Kern-Schale-Schale-Partikels angegeben. Dieser Anteil wird im Folgenden als Weichphase bezeichnet. Dies umfasst dabei auch optional "harte" Kerne in einem Kern-Schale-Schale-Partikel.

PMMA in Schicht B und C: In Schicht B und C wurde - wenn nicht anders angegeben - ein schlagzäh-modifiziertes Polymer, enthaltend ein PMMA-Matrixmaterial aus 92,8 Gew% MMA, 7,3 Gew% Butylacrylat und 0,8 Gew% MA, sowie die Weichphase eines Kern-(Schale-)Schale-(Meth)acrylats als Schlagzähmodifier eingesetzt.

In Vergleichsbeispiel 1 bestand das PMMA-Matrixmaterial der Schicht C abweichend davon aus 92 Gew% MMA und aus 8 Gew% Butylacrylat.

In den Beispielen 1 und 2 bestand das PMMA-Matrixmaterial der Schicht B jeweils aus 96 Gew% MMA, 0,9 Gew% Ethylacrylat und 3,1 Gew% Methylacrylat.

### Vergleichsbeispiel 1:

Schicht A: 5 µm Kureha KF Polymer T850 (PVDF) mit einem Haze von 11,8
Schicht C: 45 µm dicke Schicht aus 51,1 Gew% PMMA-Matrixmaterial, 20 Gew% Haftvermittler, 26 Gew% Weichphase und 2,9 Gew% UV-Stabilisatorpaket. Bei dem Schlagzähmodifier handelte es sich um einen Kern-Schale-Partikel.

Das HPL zeigte nach dem Verpressen und einer Bewitterung von 3333 h im Xenotest Alpha-High-Energy einen deutlichen Haftungsverlust zwischen den Schichten A und C (Delamination).

### Vergleichsbeispiel 2:

Schicht A: 5 µm Solef® 9009 mit einem Haze von 2,98.
Schicht C: 45 µm dicke Schicht aus 59,2 Gew% PMMA-Matrixmaterial, 15 Gew% Haftvermittler, 24 Gew% Weichphase und 1,8 Gew% UV-Stabilisatorpaket. Bei dem Schlagzähmodifier handelte es sich um einen Kern-Schale-Partikel.

Das HPL zeigte nach dem Verpressen einen deutlichen Blauschimmer.

### Beispiel 1:

Schicht A: 5 µm Solef® 9009
Schicht B: 40 µm dicke Schicht aus 65,5 Gew% PMMA-Matrixmaterial, 32,4 Gew% Weichphase eines Kern-Schale-Schale-Partikels und 2,1 Gew% UV-Stabilisatorpaket.
Schicht C: 5 µm dicke Schicht aus 59,2 Gew% PMMA-Matrixmaterial, 15 Gew% Haftvermittler, 24 Gew% Weichphase und 1,8 Gew% UV-Stabilisatorpaket. Bei dem Schlagzähmodifier handelte es sich um einen Kern-Schale-Partikel.

### Beispiel 2:

Schicht A: 5 µm Solef® 9009
Schicht B: 40 µm dicke Schicht aus 65,5 Gew% PMMA-Matrixmaterial, 32,4 Gew% Weichphase eines Kern-Schale-Schale-Partikels und 2,1 Gew% UV-Stabilisatorpaket.
Schicht C: 5 µm dicke Schicht aus 55,5 Gew% PMMA-Matrixmaterial, 20 Gew% Haftvermittler, 22,8 Gew% Weichphase und 1,7 Gew% UV-Stabilisatorpaket. Bei dem Schlagzähmodifier handelte es sich um einen Kern-Schale-Partikel.

### Beispiel 3:

Schicht A: 5 µm Solef® 9009
Schicht B: 40 µm dicke Schicht aus 69,4 Gew% PMMA-Matrixmaterial, 28,5 Gew% Weichphase eines Kern-Schale-Schale-Partikels und 2,1 Gew% UV-Stabilisatorpaket.
Schicht C: 5 µm dicke Schicht aus 55,5 Gew% PMMA-Matrixmaterial, 20 Gew% Haftvermittler, 22,8 Gew% Weichphase und 1,7 Gew% UV-Stabilisatorpaket. Bei dem Schlagzähmodifier handelte es sich um einen Kern-Schale-Partikel.

### Beispiel 4:

Schicht A: 5 µm Solef® 9009
Schicht B: 40 µm dicke Schicht aus 69,4 Gew% PMMA-Matrixmaterial, 28,5 Gew% Weichphase eines Kern-Schale-Schale-Partikels und 2,1 Gew% UV-Stabilisatorpaket.
Schicht C: 5 µm dicke Schicht aus 59,2 Gew% PMMA-Matrixmaterial, 15 Gew% Haftvermittler, 24 Gew% Weichphase und 1,8 Gew% UV-Stabilisatorpaket. Bei dem Schlagzähmodifier handelte es sich um einen Kern-Schale-Partikel.

**Ergebnisstabelle 1**

| UV-Schutzfolie | Bsp.1 | Bsp.2 | Bsp.3 | Bsp.4 | Vergleichsbsp.2 |
|---|---|---|---|---|---|
| "Blauschimmer" | + | + | + | + | - |
| H₂0-Lagertest^{1.)} 2h @ 100°C | + | + | + | + | - (Haze) |
| H₂0-Lagerertest 48h @ 65°C | + | + | + | + | + |

| | | | | | |
|---|---|---|---|---|---|
| ^{1.)} Haftungsprüfung / Gitterschnitttest: bestanden | | | | | |

**Ergebnisstabelle 2**

| UV-Schutzfolie | Bsp.1 | Bsp.2 | Bsp.3 | Bsp.4 | Vergleichsbsp.1 |
|---|---|---|---|---|---|
| Bewitterung Alpha High-Energy nach 3333h | + | + | + | 0 | -- |
| H₂0-Lagertest^{1.)} 2h @ 100°C | + | + | + | + | - (Haftverlust) |
| H₂0-Lagerertest 48h @ 65°C | + | + | + | + | + |

## Patentansprüche

1. UV-Schutzfolie, geeignet zum Verpressen auf Schichtpressstoffplatten (HPLs), **dadurch gekennzeichnet, dass** diese Schutzfolie von außen nach innen folgende miteinander verbundene Schichten aufweist: eine Schicht A, enthaltend ein Fluorpolymer, eine PMMA-Schicht B, enthaltend mindestens einen UV-Stabilisator und/oder -Absorber und eine Schicht C, enthaltend mindestens einen Haftvermittler, bei dem es sich um ein Copolymer, aufweisend mindestens ein (Meth)acrylat und ein Anhydrid und/oder eine Disäure handelt, und mindestens ein Poly(meth)acrylat, wobei die Schicht C mit einem Harz-getränkten Papier zu einem HPL verpresst werden kann und die Schichten B und C mindestens ein Schlagzähmodifizierungsmittel aufweisen.

2. Schutzfolie gemäß Anspruch 1, **dadurch gekennzeichnet, dass** Schicht A eine Dicke zwischen 1 und 25 µm, Schicht B eine Dicke zwischen 15 und 125 µm und Schicht C eine Dicke zwischen 1 und 25 µm aufweisen.

3. Schutzfolie gemäß Anspruch 1 oder 2, **dadurch gekennzeichnet, dass** die Schichten B und C jeweils mindestens einen UV-Stabilisator und/oder-Absorber aufweisen.

4. Schutzfolie gemäß mindestens einem der Ansprüche 1 bis 3, **dadurch gekennzeichnet, dass** beide Schichten B und C jeweils ein PMMA-Matrixmaterial und Schlagzähmodifizierungsmittel aufweisen, und dass es sich bei den Schlagzähmodifizierungsmitteln um Kern-Schale oder um Kern-Schale-Schale-Partikel handelt.

5. Schutzfolie gemäß Anspruch 4, **dadurch gekennzeichnet, dass** es sich bei dem PMMA-Matrixmaterial in Schicht B und bei dem Poly(meth)acrylat in Schicht C jeweils um ein Polymer, welches erhalten wird durch eine Polymerisation einer Zusammensetzung bestehend aus 80 bis 100 Gew% Methylmethacrylat und 0 bis 20 Gew% eines oder mehrerer weiterer ethylenisch ungesättigter, radikalisch polymerisierbarer Monomerer, bevorzugt Alkylacrylate, handelt.

6. Schutzfolie gemäß mindestens einem der Ansprüche 1 bis 5, **dadurch gekennzeichnet, dass** die Schichten B und optional C zur UV-Stabilisierung HALS-Verbindungen und Triazine und/oder Benztriazole enthält.

7. Schutzfolie gemäß mindestens einem der Ansprüche 1 bis 6, **dadurch gekennzeichnet, dass** es sich bei dem Fluorpolymer in Schicht A um PVDF, PVF, PETFE oder um PFEVE handelt.

8. Schutzfolie gemäß Anspruch 7, **dadurch gekennzeichnet, dass** es sich bei dem Fluorpolymer um ein überwiegend amorphes mit einem Haze kleiner 5 oder um ein mikrokristallines PVDF mit einem Haze kleiner 5 handelt.

9. Schutzfolie gemäß mindestens einem der Ansprüche 1 bis 8, **dadurch gekennzeichnet, dass** Schicht A ausschließlich aus PVDF und optionalen Additiven besteht.

10. Schutzfolie gemäß mindestens einem der Ansprüche 1 bis 9, **dadurch gekennzeichnet, dass** Schicht C zwischen 5 und 99 Gew%, bevorzugt 10 bis 40 Gew% Haftvermittler enthält.

11. Schutzfolie gemäß mindestens einem der Ansprüche 1 bis 10, **dadurch gekennzeichnet, dass** es sich bei dem Haftvermittler in Schicht C um ein Copolymer aus MMA, Styrol und Maleinsäureanhydrid handelt.

12. Schutzfolie gemäß mindestens einem der Ansprüche 1 bis 11, **dadurch gekennzeichnet, dass** die Schicht A auf der Außenseite nach einem Pressvorgang eine Struktur aufweist.

13. Verfahren zur Herstellung einer Schutzfolie gemäß mindestens einem der Ansprüche 1 bis 12, **dadurch gekennzeichnet, dass** die Schutzfolie mittels Adaptercoextrusion oder Mehrkanalcoextrusion oder einer Kombination aus beiden Verfahren hergestellt wird.

14. Verwendung einer Schutzfolie gemäß mindestens einem der Ansprüche 1 bis 11 zur Herstellung von HPLs, MPLs oder CPLs.

15. Verwendung gemäß Anspruch 14, **dadurch gekennzeichnet, dass** die Schutzfolie direkt auf eine mit Melaminharz getränkte Papierschicht gepresst wird.

16. Verwendung gemäß Anspruch 14 oder 15, **dadurch gekennzeichnet, dass** die Schutzfolie auf ein mit Melaminharz getränktem Papier mit einem Druck ≥ 5 MPas bei einer Temperatur ≥ 120 °C mit einer Zykluszeit zwischen 30 und 100 min in einer Presse gepresst wird.

17. Verwendung gemäß Anspruch 16, **dadurch gekennzeichnet, dass** sich in der Presse auf der Seite gegenüber der Schicht A eine strukturierte Oberfläche befindet.

## Claims

1. UV-protective film suitable for lamination on high-pressure laminates (HPLs), **characterized in that** this protective film has, from the outside to the inside, the following layers bonded to one another: a layer A comprising a fluoropolymer, a PMMA layer B comprising at least one UV stabilizer and/or UV absorber, and a layer C comprising at least one adhesion promoter, which is a copolymer comprising at least one (meth)acrylate and one anhydride and/or one diacid, and at least one poly(meth)acrylate, where the layer C can be laminated with a resin-impregnated paper to give an HPL and the layers B and C comprise at least one impact modifier.

2. Protective film according to Claim 1, **characterized in that** the thickness of layer A is from 1 to 25 µm, the thickness of layer B is from 15 to 125 µm and the thickness of layer C is from 1 to 25 µm.

3. Protective film according to Claim 1 or 2, **characterized in that** the layers B and C respectively comprise at least one UV stabilizer and/or UV absorber.

4. Protective film according to at least one of Claims 1 to 3, **characterized in that** the two layers B and C respectively comprise a PMMA matrix material and comprise impact modifiers, and that the impact modifiers are core-shell or core-shell-shell particles.

5. Protective film according to Claim 4, **characterized in that** the PMMA matrix material in layer B and the poly(meth)acrylate in layer C are respectively a polymer obtained through polymerization of a composition composed of from 80 to 100% by weight of methyl methacrylate and from 0 to 20% by weight of one or more other ethylenically unsaturated monomers amenable to free-radical polymerization, preferably alkyl acrylates.

6. Protective film according to at least one of Claims 1 to 5, **characterized in that** the layers B and optionally C comprise, for UV stabilization, HALS compounds and triazines and/or benzotriazoles.

7. Protective film according to at least one of Claims 1 to 6, **characterized in that** the fluoropolymer in layer A is PVDF, PVF, PETFE or PFEVE.

8. Protective film according to Claim 7, **characterized in that** the fluoropolymer is a predominantly amorphous with a haze value smaller than 5 or a microcrystalline PVDF with a haze value smaller than 5.

9. Protective film according to at least one of Claims 1 to 8, **characterized in that** layer A is composed exclusively of PVDF and optional additives.

10. Protective film according to at least one of Claims 1 to 9, **characterized in that** layer C comprises from 5 to 99% by weight, preferably from 10 to 40% by weight, of adhesion promoter.

11. Protective film according to at least one of Claims 1 to 10, **characterized in that** the adhesion promoter in layer C is a copolymer of MMA, styrene and maleic anhydride.

12. Protective film according to at least one of Claims 1 to 11, **characterized in that**, after a press procedure, the layer A has a structure on the external side.

13. Process for the production of a protective film according to at least one of Claims 1 to 12, **characterized in that** the protective film is produced by adapter coextrusion or multiple-manifold coextrusion or a combination of the two processes.

14. Use of a protective film according to at least one of Claims 1 to 11 for the production of HPLs, MPLs or CPLs.

15. Use according to Claim 14, **characterized in that** the protective film is pressed directly onto a melamine-resin-impregnated paper layer.

16. Use according to Claim 14 or 15, **characterized in that** the protective film is pressed onto a melamine-resin-impregnated paper in a press by a pressure ≥ 5 MPas at a temperature ≥ 120°C with a cycle time of from 30 to 100 min.

17. Use according to Claim 16, **characterized in that** in the press on the side counterposed to the layer A there is a structured surface.

## Revendications

1. Film de protection contre les UV, approprié pour être pressé sur des panneaux stratifiés haute pression (HPL), **caractérisé en ce que** ce film de protection comprend de l'extérieur vers l'intérieur les couches suivantes reliées les unes avec les autres : une couche A, contenant un polymère fluoré, une couche de PMMA B, contenant au moins un stabilisateur et/ou absorbeur d'UV, et une couche C, contenant au moins un promoteur d'adhérence, qui est un copolymère, comprenant au moins un (méth)acrylate et un anhydride et/ou un diacide, et au moins un poly(méth)acrylate, la couche C pouvant être pressée en un HPL avec un papier imprégné de résine, et les couches B et C comprenant au moins un agent de modification de la résistance aux impacts.

2. Film de protection selon la revendication 1, **caractérisé en ce que** la couche A présente une épaisseur comprise entre 1 et 25 µm, la couche B présente une épaisseur comprise entre 15 et 125 µm, et la couche C présente une épaisseur comprise entre 1 et 25 µm.

3. Film de protection selon la revendication 1 ou 2, **caractérisé en ce que** les couches B et C comprennent chacune au moins un stabilisateur et/ou absorbeur d'UV.

4. Film de protection selon au moins l'une quelconque des revendications 1 à 3, **caractérisé en ce que** les couches B et C comprennent toutes les deux un matériau de matrice en PMMA et un agent de modification de la résistance aux impacts, et **en ce que** les agents de modification de la résistance aux impacts sont des particules noyau-enveloppe ou noyau-enveloppe-enveloppe.

5. Film de protection selon la revendication 4, **caractérisé en ce que** le matériau de matrice en PMMA dans la couche B et le poly(méth)acrylate dans la couche C sont chacun un polymère qui est obtenu par une polymérisation d'une composition constituée par 80 à 100 % en poids de méthacrylate de méthyle et 0 à 20 % en poids d'un ou de plusieurs autres monomères éthyléniquement insaturés, polymérisables par voie radicalaire, de préférence des acrylates d'alkyle.

6. Film de protection selon au moins l'une quelconque des revendications 1 à 5, **caractérisé en ce que** les couches B et éventuellement C contiennent des composés HALS et des triazines et/ou des benzotriazoles pour la stabilisation UV.

7. Film de protection selon au moins l'une quelconque des revendications 1 à 6, **caractérisé en ce que** le polymère fluoré dans la couche A est le PVDF, le PVF, le PETFE ou le PFEVE.

8. Film de protection selon la revendication 7, **caractérisé en ce que** le polymère fluoré est un essentiellement amorphe ayant un trouble inférieur à 5 ou un PVDF microcristallin ayant un trouble inférieur à 5.

9. Film de protection selon au moins l'une quelconque des revendications 1 à 8, **caractérisé en ce que** la couche A est exclusivement constituée par du PVDF et éventuellement des additifs.

10. Film de protection selon au moins l'une quelconque des revendications 1 à 9, **caractérisé en ce que** la couche C contient entre 5 et 99 % en poids, de préférence de 10 à 40 % en poids, de promoteur d'adhérence.

11. Film de protection selon au moins l'une quelconque des revendications 1 à 10, **caractérisé en ce que** le promoteur d'adhérence dans la couche C est un copolymère de MMA, de styrène et d'anhydride de l'acide maléique.

12. Film de protection selon au moins l'une quelconque des revendications 1 à 11, **caractérisé en ce que** la couche A présente une structure sur le côté extérieur après un processus de pressage.

13. Procédé de fabrication d'un film de protection selon au moins l'une quelconque des revendications 1 à 12, **caractérisé en ce que** le film de protection est fabriqué par co-extrusion à adaptateur ou co-extrusion à plusieurs canaux ou une combinaison des deux procédés.

14. Utilisation d'un film de protection selon au moins l'une quelconque des revendications 1 à 11 pour la fabrication d'HPL, de MPL ou de CPL.

15. Utilisation selon la revendication 14, **caractérisée en ce que** le film de protection est pressé directement sur une couche de papier imprégnée avec une résine de mélamine.

16. Utilisation selon la revendication 14 ou 15, **caractérisée en ce que** le film de protection est pressé sur un papier imprégné avec une résine de mélamine à une pression ≥ 5 MPa à une température ≥ 120 °C avec un temps de cycle compris entre 30 et 100 minutes dans une presse.

17. Utilisation selon la revendication 16, **caractérisée en ce qu'**une surface structurée se trouve dans la presse sur le côté opposé à la couche A.
